# EUROPEAN PATENT SPECIFICATION

(11) **EP 0 449 137 B1**
(45) Date of publication and mention of the grant of the patent: **09.08.1995**
(21) Application number: 91104540.9
(22) Date of filing: 22.03.1991
(51) Int. Cl.: B01D 27/10

(54) **Oil filter for internal-combustion engines**
Ölfilter für Brennkraftmaschinen
Filtre d'huile pour moteurs à combustion interne

(30) Priority: 26.03.1990 IT 1980790
(43) Date of publication of application: 02.10.1991
(73) Proprietor: FIAAM FILTER S.P.A., I-46100 Mantova (IT)
(72) Inventor: Ticinesi, Claudio, I-46100 Mantova (IT)
(74) Representative: Modiano, Guido, Dr.-Ing.

(56) References cited:
- EP-A- 0 322 828
- EP-A- 0 324 973
- DE-A- 2 328 936
- GB-A- 1 341 116
- GB-A- 2 056 873
- US-A- 3 984 318
- US-A- 4 820 409
- US-A- 4 997 554

## Description

The present invention relates to an oil filter for internal-combustion engines.

It is known that a widespread type of filters for the lubricating oil of internal-combustion engines comprises an outer cup-shaped container which is adapted for containing a filtration pack which in turn is shaped like a hollow cylinder; said container is closed by means of a head provided with an axial connection adapted for connecting the filter to the engine and with a plurality of holes which are distributed along a circumference which is concentric to said connection and are adapted for connecting the portion of space inside the filter, comprised between the outer container and the filtration pack, to the oil sump.

When the oil filter of the described type is intended to be mounted with its head directed downward, it is provided, according to the known types, with two distinct valves, termed respectively emptying check valve and drainage check valve.

The emptying check valve, which essentially comprises a shutter actuated by a spring, is inserted in a cup-like structure and is intended to prevent the escape of the oil contained in the filter through the connection to the engine when said engine stops, and such emptying check valve is the first to be inserted in the filter in different manners according to the type of filtration pack.

In the case of a filtration pack in which the cover is made of cardboard, the emptying check valve is assembled to said pack simply by resting, whereas in the case of a cover made of metal plate, assembly occurs by welding or snap-together fitting.

The drainage check valve is inserted in the filter according to the known devices downstream of the emptying check valve; said drainage check valve comprises a rubber stopper which is intended to close, when the engine is not running, the holes which connect the filter to the oil sump in order to prevent the escape therefrom by gravity of the oil contained in the filter.

It is thus evident that the manufacture of a filter executed according to the known art entails the presence, in the assembly line, of two separate stations, one for the insertion of the emptying check valve and one for the insertion of the drainage check valve, with a considerable negative effect on the manufacturing costs of the product.

Known from EP-A-0 322 828 is an anti-drainage valve for oil filters for internal combustion engines, of the type comprising a cup shaped container adapted to contain a filtering element and comprising a head for closing the container provided with a threaded axial connection adapted to connect the filter to the engine, and with a plurality of holes, distributed along the circumference concentrical to said connection and adapted to connect the filter to an oil sump, the valve comprising a tube section adapted to make contact exclusively by means of a washer having the shape of a circular crown with the head portion comprised between the axial connection and the circumference, and being provided at the periphery with a slideable disc having a circumferential ridge pushed by an elastic element to press with said ridge against the washer so as to force it against the head at the circumference comprising said plurality of holes.

The aim of the present invention is to provide a filter for the lubricating oil for internal-combustion engines which can be obtained with a considerable constructive simplification with respect to the known art, so as to ensure a significant reduction in costs.

This aim is achieved by an oil filter for internal-combustion engines, according to the invention as defined in Claim 1.

Advantageously, the filter for the lubricating oil for internal-combustion engines according to the invention is characterized in that the emptying check valve and the drainage check valve are monolithically connected by a clamping defined at their mutually facing ends, so as to produce the circumferential raised portion adapted for defining the resting surface of the valve unit on the filtration pack.

Further characteristics and advantages will become apparent from the description of a preferred but not exclusive embodiment of the invention, illustrated only by way of non-limitative example in the accompanying drawings, wherein:
figure 1 is a partially sectional elevation view of the monolithic valve unit, taken along a longitudinal plane;
figure 2 is an enlarged view of the detail indicated by a circle in figure 1.

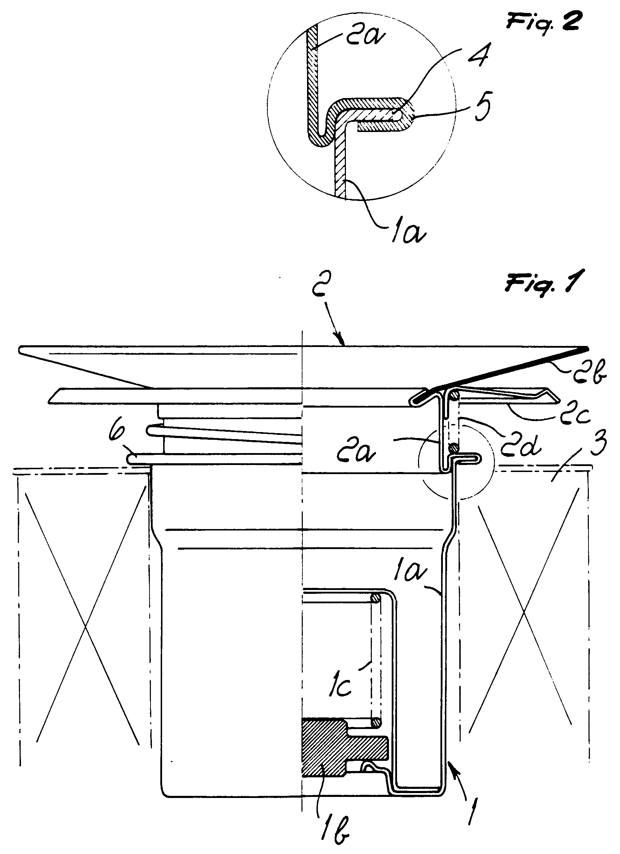

With reference to the above figures, the reference numerals 1 and 2 generally indicate respectively the emptying check valve and the drainage check valve, which are connected at the region indicated in figure 2 so as to constitute a monolithic valve unit insertable inside the filtration pack 3 of an oil filter.

Turning to details, the emptying check valve 1 comprises, in a known manner, within a cup 1a, a shutter 1b, which is controlled by a spring 1c and is adapted for preventing, when the motor is not running, the escape of the oil contained in the filter from the axial connection comprised within the head of said filter, which is not illustrated in the figure.

In an equally known manner, the drainage check valve 2 comprises a tube section 2a, with which a rubber stopper 2b is rigidly associated; said stopper is adapted for being pushed against the head of the filter, when the motor is not running, so as to close the holes provided in said head for connection to the oil sump, by a disk 2c, which is actuated by a spring 2d.

The manner in which the two valves 1 and 2 are connected so as to form the monolithic valve unit are indicated in figure 2; the fold 4 of the end of the cup 1a is clamped by the folded end 5 of the tube section 2a so as to form a circumferential raised portion 6 which is adapted for constituting the resting surface of the valve unit on the filtration pack 3.

It is evident that the monolithic valve unit according to the invention allows a considerable constructive Simplification with respect to the known devices, since the presence of a single station, for the insertion of the valve unit until it is in the position defined by the resting of the circumferential raised portion 6 on the filtration pack 3, is sufficient in the filter assembly line.

The described invention is susceptible to numerous modifications and variations, all of which are within the scope of the inventive concept; thus, for example, the emptying check valve 1 and the drainage check valve 2 can be connected monolithically by welding.

In the practical execution of the invention, all the details may be replaced with other technically equivalent elements; the materials employed, as well as the shapes and dimensions, may furthermore be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Oil filter for internal-combustion engines, comprising a cup-shaped container adapted for containing a hollow cylindrical filtration pack (3) and a drainage check valve (2), said cup-shaped container being closed by a head provided with an axial connection adapted for connecting the filter to the engine and with a plurality of holes distributed on a circumference which is concentric to said connection, said holes being adapted for connecting said filter to an oil sump, and said drainage check valve (2) comprising a tube section (2a) with which a rubber stopper (2b) is rigidly associated, said stoper being adapted to be pushed against said head and to close said holes provided in said head, characterized in that it further comprises an emptying check valve (1), comprising a cup (1a) and a shutter (1b) controlled by a spring (1c) and adapted for preventing the escape of oil from said axial connection of said head, said emptying check valve being monolithically connected to said drainage check valve to form a monolithic valve unit, said valve unit being adapted for being inserted from the head side into a portion of space delimited inside the filtration pack (3) and for resting on said filtration pack at a circumferential raised portion (6), said circumferential raised portion being defined by mutually facing ends (4,5) of said emptying check valve and of said drainage check valve.

2. Oil filter according to claim 1, characterized in that said emptying check valve (1) and said drainage check valve (2) are connected monolithically by means of a clamping performed at their mutually facing ends (4,5), so as to define said circumferential raised portion (6).

3. Oil filter according to claim 1, characterized in that the emptying check valve (1) and the drainage check valve (2) are monolithically connected by welding.

## Patentansprüche

1. Ölfilter für Brennkraftmaschinen, mit einem napfformigen, zur Aufnahme einer hohlen zylindrischen Filterpatrone (3) und eines Auslauf-Rückschlagventils (2) vorgesehenen Behälter, der durch eine Haube verschlossen wird, die eine Axialverbindung zum Verbinden des Filters mit dem Motor und eine Mehrzahl von Löchern aufweist, die auf einem zu der Verbindung konzentrischen Umfang verteilt sind, wobei die Löcher vorgesehen sind, um den Filter mit einem Ölsumpf zu verbinden, und das Auslauf-Rückschlagventil (2) einen Rohrabschnitt (2a) umfaßt, mit dem ein Gummiverschluß (2b) fest verbunden ist, wobei der Verschluß vorgesehen ist, um gegen die Haube gedrückt zu werden, und die in der Haube vorgesehenen Löcher zu verschließen, gekennzeichnet durch ein Entleerungs-Rückschlagventil (1), mit einem Napf (1a) und einem durch eine Feder (1c) gesteuerten Verschluß (1b), der dazu vorgesehen ist, um einen Ölverlust durch die Axialverbindung der Haube zu verhindern, wobei das Entleerungs-Rückschlagventil einstückig mit dem Auslauf-Rückschlagventil verbunden ist, wobei die Ventileinheit vorgesehen ist, um mit der Kopfseite in einen Abschnitt begrenzten Ausmaßes innerhalb der Filterpatrone (3) und auf einem am Umfang verlaufenden erhabenen Abschnitt aufliegend eingesetzt zu werden, wobei der am Umfang verlaufende erhabene Abschnitt gebildet wird durch gegenseitig zugekehrte Enden (4, 5) des Entleerungs-Rückschlagventils und des Auslauf-Rückschlagventils.

2. Ölfilter nach Anspruch 1, dadurch gekennzeichnet, daß das Entleerungs-Rückschlagventil (1) und das Auslauf-Rückschlagventil (2) mittels einer an ihren gegenseitigen zugekehrten Enden (4, 5) ausgebildeten Klammerverbindung einteilig verbunden sind, um den am Umfang verlaufenden erhabenen Abschnitt auszubilden.

3. Ölfilter nach Anspruch 1, dadurch gekennzeichnet, daß das Entleerungs-Rückschlagventil (1) und das Auslauf-Rückschlagventil (2) einteilig durch Verschweißen verbunden sind.

## Revendications

1. Filtre à huile pour moteurs à combustion interne, comprenant un récipient en forme de coupelle adapté pour contenir un ensemble de filtration (3) cylindrique, creux et un clapet de retenue d'écoulement (2), ledit récipient en forme de coupelle étant fermé par une tête munie d'une liaison axiale adaptée pour connecter le filtre au moteur, et d'une pluralité de trous répartis sur une circonférence qui est concentrique à ladite liaison, lesdits trous étant adaptés pour connecter ledit filtre à un carter d'huile, et ledit clapet de retenue d'écoulement (2) comprenant une section de tube (2a) à laquelle une butée en caoutchouc (2b) est rigidement associée, ladite butée étant adaptée pour être poussée contre ladite tête et pour fermer lesdits trous prévus dans ladite tête,
caractérisé en ce qu'il comprend, de plus, un clapet de retenue de vidange (1), comprenant une coupelle (1a) et un obturateur (1b) commandé par un ressort (1c) et adapté pour empêcher la fuite d'huile de ladite liaison axiale de ladite tête, ledit clapet de retenue de vidange étant relié, de façon monolithique, audit clapet de retenue d'écoulement pour former une unité de clapets monolithique, ladite unité de clapets étant adaptée pour être insérée du côté de la tête dans une partie d'espace délimitée à l'intérieur de l'ensemble de filtration (3) et pour reposer sur ledit ensemble de filtration à une partie en saillie périphérique (6), ladite partie en saillie périphérique étant définie par des extrémités (4,5) se faisant face mutuellement dudit clapet de retenue de vidange et dudit clapet de retenue d'écoulement.

2. Filtre à huile selon la revendication 1,
caractérisé en ce que ledit clapet de retenue de vidange (1) et ledit clapet de retenue d'écoulement (2) sont reliés monolithiquement par l'intermédiaire d'un bridage réalisé à leurs extrémités se faisant face mutuellement (4,5), afin de définir ladite partie en saillie périphérique (6).

3. Filtre à huile selon la revendication 1,
caractérisé en ce que le clapet de retenue de vidange (1) et le clapet de retenue d'évidement (2) sont reliés monolithiquement par soudage.
